# EUROPÄISCHE PATENTSCHRIFT

(11) **EP 4 102 252 B1**
(45) Veröffentlichungstag und Bekanntmachung des Hinweises auf die Patenterteilung: **20.08.2025**
(21) Anmeldenummer: 22177125.6
(22) Anmeldetag: 03.06.2022
(51) Int. Cl.: G01S 7/497, G01S 17/86

(54) **SICHERE ÜBERWACHUNG EINES SCHUTZBEREICHS MITTELS EINER TOF-KAMERA**
SECURE MONITORING OF A PROTECTED AREA USING A TOF CAMERA
SURVEILLANCE SÛRE D'UNE ZONE DE PROTECTION AU MOYEN D'UNE CAMÉRA TOF

(30) Priorität: 11.06.2021 DE 102021115221
(43) Veröffentlichungstag der Anmeldung: 14.12.2022
(73) Patentinhaber: K. A. Schmersal Holding GmbH & Co. KG, 42279 Wuppertal (DE)
(72) Erfinder: Neidhart, Dr. Johannes, 51519 Odenthal (DE); Uhlenbrock, Christian, 58239 Schwerte (DE); Hoepken, Hermann, 45549 Sprockhövel (DE)
(74) Vertreter: Kalkoff & Partner Patentanwälte mbB

(56) Entgegenhaltungen:
- EP-A1- 3 825 731
- DE-A1- 102005 040 763
- DE-A1- 19 833 207
- US-A1- 2013 050 426
- US-A1- 2019 227 174

## Beschreibung

Die Erfindung betrifft eine Vorrichtung und ein Verfahren zur Überwachung eines Schutzbereichs. Insbesondere betrifft die Erfindung Vorrichtungen und Verfahren unter Verwendung einer ToF (Time-of-Flight) Kamera.

In verschiedenen technischen Bereichen, bspw. in industriellen Produktionsanlagen, werden Schutzeinrichtungen verwendet, um sowohl Menschen vor Gefahren des Produktionsvorgangs als auch den Produktionsvorgang vor Störungen zu schützen. Neben trennenden Schutzeinrichtungen wie Barrieren mit überwachten Türen sind auch berührungslose optische Systeme wie bspw. Lichtschranken bekannt.

Eine berührungslose Überwachung kann auch durch optische Erfassung eines Schutzbereichs erfolgen. Hierfür sind einerseits herkömmliche Digitalkameras bekannt, mit denen digitale Bilder, d. h. Matrix-Anordnungen von einzelnen Bildpunkten, erfasst werden können. Andererseits sind seit einiger Zeit auch Kamerasysteme bekannt, die mittels des Laufzeitverfahrens (englisch: Time-of-Flight, ToF) auch Abstände messen und diese Bildbereichen zuordnen können. Während herkömmliche digitale Bilder also eine zweidimensionale Erfassung darstellen, ermöglichen die Abstandsinformationen einer ToF-Kamera eine dreidimensionale Erfassung des beobachteten Schutzbereichs.

Bekannte ToF-Kameras verwenden eine zeitlich modulierte Beleuchtung, bspw. mit Lichtpulsen, wobei die Ermittlung der Abstandsinformationen auf der Zeit beruht, die das Licht zu dem im jeweiligen Bildbereich erfassten Objekt und wieder zurück zur Kamera benötigt.

Allerdings handelt es sich bei bekannten ToF-Kamerasystemen um komplexe Systeme mit verschiedenen optischen/elektrischen Komponenten, so dass bei der Verwendung in einer Schutzeinrichtung ein Risiko möglicher Fehlfunktionen und daraus folgender fehlerhafter Erfassung betrachtet werden muss.

Die DE 10 2018 116 481 beschreibt eine 3D-Lichtlaufzeitkamera zur Erfassung dreidimensionaler Bilddaten aus einem Erfassungsbereich. Eine Beleuchtungseinheit ist vorgesehen zum Aussenden von in mindestens zwei Frequenzen moduliertem Sendelicht in den Erfassungsbereich. Ein Bildsensor mit einer Vielzahl von Pixeln ist vorgesehen zum Erzeugen von Empfangssignalen aus zurückgeworfenem Sendelicht. Auswertungsschaltungen sind den Pixeln zugeordnet zur Bestimmung von jeweils mindestens einem Abstand pro Pixel aus den Empfangssignalen mittels eines Lichtlaufzeitverfahrens anhand der zwei Frequenzen. Ein internes Referenzziel leitet einen Teil des Sendelichts oder Testlicht innerhalb der LED-Laufzeitkamera auf den Bildsensor. Die 3D-Lichtlaufzeitkamera ist sicher ausgebildet und weist eine Auswertungseinheit auf, die für einen Funktionstest eine mit den Auswertungsschaltungen bestimmte Messgröße des Referenzziels mit einer Referenzmessgröße vergleicht.

Die US 2019/227174 A1 offenbart eine Belichtungssteuervorrichtung zum Steuern einer Integrationsperiode eines TOF-Bilderfassungssensors mit einer Beleuchtungsquelle, die eine gepulste Beleuchtung mit einer Impulswiederholungsfrequenz bereitstellt, in der jedes Pixel eines Arrays von Pixeln jeweils durch mehrere Paare von Erfassungswerten dargestellt wird. Jedes Paar von Erfassungswerten entspricht erfasstem Licht, das gemäß einem gepulsten Abtastmuster abgetastet wird, das eine jeweilige Phasenbeziehung mit der gepulsten Beleuchtung der Beleuchtungsquelle aufweist. Ein Detektor ist dazu konfiguriert, für einen ausgewählten Erfassungswert einen Satz von einem oder mehreren Zielpixeln einen Teil des Erfassungswerts zu ermitteln, der unabhängig von der Integrationsperiode ist, und einen Teil, der von der Integrationsperiode abhängt. Eine Steuerung ist dazu konfiguriert, eine nächste Integrationsperiode für den Bilderfassungssensor auszuwählen, so dass für eine nächste Erfassung der Teil des Erfassungswerts, der von der erhöhten Integrationsperiode abhängt, im Wesentlichen ist gleich der Differenz zwischen dem erforderlichen Erfassungswert und dem Anteil, der unabhängig von der Integrationsperiode ist.

Die EP 1 825 731 A1 offenbart einen optoelektronischen Sicherheitssensor mit einem Lichtempfänger zum sicheren Erfassen von Erfassungsdaten eines Überwachungsbereichs. Eine Steuer- und Auswertungseinheit ist dafür ausgebildet, aus den Erfassungsdaten die eigene Position sicher zu bestimmen, um positionsspezifisch eine sicherheitsrelevante Funktion auszulösen. Der Sicherheitssensor ist ein 3D-Sicherheitssensor, dessen Erfassungsdaten dreidimensionale Bilddaten sind. Die Steuer- und Auswertungseinheit ist dafür ausgebildet, die eigene Position anhand dreidimensionaler Merkmale zu bestimmen.

Es kann als Aufgabe angesehen werden, eine Vorrichtung und ein Verfahren zur Überwachung des Schutzbereichs vorzuschlagen, bei dem unter Nutzung einer ToF-Kamera eine sichere Überwachung gewährleistet werden kann.

Die Aufgabe wird gelöst durch eine Vorrichtung gemäß Anspruch 1 sowie durch ein Verfahren gemäß Anspruch 11. Abhängige Ansprüche beziehen sich auf vorteilhafte Ausführungsformen der Erfindung.

Die erfindungsgemäße Vorrichtung weist Erfassungsmittel zum Erfassen von Informationen aus einem Schutzbereich auf und Auswertungsmittel zum Auswerten der erfassten Informationen und zur Lieferung eines Auswertungssignals abhängig von der Erkennung.

Die verschiedenen Mittel der erfindungsgemäßen Vorrichtung, d.h. hier Erfassungsmittel und Auswertungsmittel, werden hier zunächst rein funktional benannt, wobei sie in geeigneten Ausführungsformen bspw. sowohl Hardware- als auch Softwarekomponenten umfassen können. Dabei können die verschiedenen Mittel auch unter Nutzung gemeinsamer Komponenten realisiert sein, bspw. können dieselben elektrischen Schaltungen Funktionen sowohl der Auswertungs- als auch der Erfassungsmittel realisieren, oder Software-Komponenten beider Mittel können auf demselben Rechner, Prozessor oder anderer programmierbarer Hardware ausgeführt werden.

Der Schutzbereich kann ein beliebiger Bereich sein, in dem eine Überwachungsfunktion erforderlich ist, bspw. weil darin eine Gefahrenquelle und/oder eine zu schützende Einrichtung angeordnet ist. Bspw. kann sich im Schutzbereich eine Anlage, bspw. eine industrielle Produktionsanlage befinden, wobei im Fall einer Annäherung von Personen und/oder Objekten eine Steuerfunktion ausgeführt werden kann, wie bspw. Ausgabe einer Warnung, Verlangsamung oder Anhalten der Anlage.

Erfindungsgemäß umfassen die Erfassungsmittel mindestens eine ToF-Kamera zur Erfassung von digitalen Bildern des Schutzbereichs und zur Ermittlung von Abstandsinformationen von Bildbereichen der digitalen Bilder des Schutzbereichs. Unter einer ToF-Kamera wird jede Einrichtung verstanden, die aus Licht-Laufzeitinformationen die Abstände von Bildbereichen, d. h. Gruppen von Pixeln oder einzelnen Pixeln der digitalen Bilder ermittelt. Die Erfassungsmittel liefern somit zweidimensionale Informationen als digitale Bilder und ergänzend dazu die Abstandsinformationen als dritte Dimension. Die Bilder und Abstandsinformationen werden in zeitlicher Abfolge erfasst und den Auswertungsmitteln zugeleitet.

Diese Informationen werden durch die Auswertungsmittel ausgewertet derart, dass darin Personen und/oder Objekte innerhalb des Schutzbereichs erkannt werden. Die Erkennung der Objekte bzw. Personen kann im einfachsten Fall die bloße Anwesenheit eines Körpers umfassen, optional zusätzlich aber auch die Positionierung innerhalb des Schutzbereichs und/oder mögliche Bewegung und/oder Identifikation. Die Identifikation kann bei Objekten die Erkennung der Art bzw. des Typs von Objekt umfassen und bei Personen eine Einzelzuordnung und/oder Zugehörigkeit zu einer Gruppe, bspw. einer zum Betreten von bestimmten Bereichen berechtigten Gruppe. Für die Erkennung können bspw. Algorithmen der Bildverarbeitung genutzt werden. Die Erkennung berücksichtigt sowohl die zweidimensionalen digitalen Bilder als auch die dreidimensionalen Daten der ToF-Kamera. Die Erkennung kann sich auf die reine Feststellung der Anwesenheit eines Objekts oder einer Person beschränken, bevorzugt umfasst sie auch die Lokalisierung des erkannten Objekts innerhalb des Schutzbereiches.

Abhängig von der Erkennung können die Auswertungsmittel ein Auswertungssignal ausgeben, worunter einerseits ein Freigabesignal verstanden werden kann, das bspw. einen gefahrlosen Zustand signalisiert und z.B. den Betrieb einer Anlage innerhalb des Schutzbereichs freigeben kann und/oder ein Alarm- oder Warnsignal, das einen Gefahrenzustand signalisiert, der erhöhte Aufmerksamkeit oder konkrete Reaktion erfordert wie bspw. eine Betriebsunterbrechung oder Ansteuerung eines sicheren Zustands. Dabei können die positiven und negativen Auswertungssignale, d. h. Freigabesignal und Alarm/Warnsignal komplementär sein, d. h. das Ausbleiben eines Freigabesignals kann als Warnsignal verstanden werden oder umgekehrt. In den Ansprüchen und der nachfolgenden Beschreibung kann somit ein positives Auswertungssignal stets auch als ausbleibendes negatives Auswertungssignal verstanden werden und umgekehrt.

Erfindungsgemäß umfassen die Erfassungsmittel mindestens einen digitalen Bildsensor zur Lieferung einer Abfolge jeweils von innerhalb einer ansteuerbaren Integrationszeit erfassten digitalen Bildern. Dabei kann es sich um einen digitalen Bildsensor als Teil der ToF-Kamera und/oder um einen separaten digitalen Bildsensor handeln, bspw. zur Erfassung von 2D-Bildern zusätzlich zu den 3D-Daten der Tof-Kamera. In Frage kommt jede Art von Bildsensor, die ein digitales Bild, d. h. matrixartig angeordnete Bildpunkte erfasst, wie bspw. CCD-Sensoren oder APS-Sensoren, bevorzugt CMOS-Sensoren. In jedem Fall verfügt der Bildsensor über eine ansteuerbare Integrationszeit, d. h. die Zeit, innerhalb der zur Erfassung jeweils eines Bildes einfallendes Licht erfasst wird, ist durch externe Ansteuerung einstellbar.

Erfindungsgemäß sind Prüfmittel vorgesehen zur Überprüfung der Funktion der Erfassungsmittel. Wie die vorgenannten Erfassungs- und Auswertungsmittel sind die Prüfmittel hier zunächst funktional benannt und können je nach Realisierung gemeinsame Hard- und/oder Softwarekomponenten mit den übrigen Mitteln der Vorrichtung nutzen. Die Prüfmittel sind dazu ausgebildet, dem Bildsensor durch Ansteuerung eine geänderte Integrationszeit vorzugeben und ein daraufhin mit der geänderten Integrationszeit erfasstes Bild zu prüfen. Bei ordnungsgemäßer Funktion des Bildsensors müsste eine Änderung der Integrationszeit zu einer geänderten Belichtung des Bildes führen, d. h. bspw. bei verlängerter Integrationszeit müssten sich an einzelnen Bildpunkten und/oder im Mittel höhere Helligkeitswerte ergeben, während bei verringerter Integrationszeit verringerte Helligkeitswerte resultieren müssten.

Die Prüfmittel sind dazu ausgebildet, abhängig von der Feststellung einer geänderten Belichtung einen möglichen Fehlerzustand zu erkennen. Abhängig von der Erkennung eines Fehlerzustands kann sich die Überwachungsvorrichtung verschieden verhalten, insbesondere den Fehlerfall nach Außen signalisieren und/oder ein negatives Auswertungssignal ausgeben, auch wenn keine Personen/Objekte erkannt worden sind.

Die Feststellung, ob ein Fehlerzustand vorliegt oder nicht kann durch Ausgabe eines internen und/oder externen Prüfsignal signalisiert werden. Hierbei handelt es sich um eine rein funktionale Angabe, d.h. es muss sich nicht um ein einzeln identifizierbares elektrisches Signal handeln, sondern kann in der Realisierung auch bspw. ein Zustand oder Variablen-Inhalt in einer Software sein. Das Prüfsignal soll bevorzugt die ordnungsgemäße Funktion der Erfassungsmittel anzeigen (positives Prüfsignal) bzw. im Fehlerfall die nicht-ordnungsgemäße Funktion signalisieren (negatives Prüfsignal). In den Ansprüchen und der nachfolgenden Beschreibung kann ein positives Prüfsignal stets auch als ausbleibendes negatives Prüfsignal verstanden werden und umgekehrt.

Die Prüfmittel erkennen somit, ob sich in Folge der geänderten Integrationszeit die Belichtung mindestens eines damit aufgenommenen Bildes innerhalb der Abfolge von Bildern in der erwarteten Weise geändert hat oder nicht. Ergibt sich bspw. keine Änderung, keine ausreichende Änderung oder sogar eine Änderung in umgekehrter Richtung, so kann ein Fehlerzustand erkannt werden, was bspw. durch ein entsprechendes negatives Prüfsignal signalisiert werden kann.

Die erfindungsgemäße Vorrichtung ermöglicht somit eine sicherheitstechnische Verwendung. Die ordnungsgemäße Funktion der Erfassungsmittel mit der ToF-Kamera wird durch mindestens einmalige, bevorzugt mehrmalige und besonders bevorzugt zyklische Prüfung sichergestellt, wobei Fehlerzuständen erkannt und ggfs. durch ein Prüfsignal signalisiert werden können. Somit kann bspw. der Betrieb einer Anlage innerhalb des Schutzbereichs nicht lediglich von der Signalisierung der Erkennung von Personen und/oder Objekten abhängig gemacht werden, sondern zusätzlich auch von einer Anzeige der ordnungsgemäßen Funktion.

Gemäß einer bevorzugten Ausführungsform können die Prüfmittel ausgebildet sein zur Ermittlung einer Abweichung der Belichtung und zum Vergleich der Abweichungen mit einer Abweichungsschwelle. Die Abweichungsschwelle kann somit bspw. einen Mindestbetrag der erwarteten Änderung angeben. Bei einer Abweichung oberhalb der Abweichungsschwelle (bzw. ggfs. auch bei einer Abweichung gleich der Abweichungsschwelle) kann die ordnungsgemäße Funktion festgestellt werden (bestandener Test) bzw. ein Fehlerfall erkannt werden im Fall der Feststellung einer Abweichung unterhalb der Abweichungsschwelle. Im einfachsten Fall kann eine Abweichung der Belichtung durch Bildung einer Differenz zwischen Helligkeitswerten ermittelt werden. Dies kann bspw. an einzelnen Bildpunkten oder Bereichen von Bildpunkten erfolgen, bevorzugt werden Werte der Mehrzahl der Bildpunkte oder sogar aller Bildpunkte verarbeitet. Die Belichtung der betrachteten Bildpunkte kann bspw. durch Bildung eines Summen- und/oder Durchschnittswertes der jeweiligen Helligkeit betrachtet werden. Die Abweichungsschwelle gibt dann den erwarteten Mindestwert für die Veränderung der Belichtung vor; liegt die Änderung darunter, muss von einem Fehlerzustand ausgegangen werden. Durch Verwendung der Abweichungsschwelle wird eine sichere Unterscheidung des Fehlerfalls von Normalfall gewährleistet, so dass geringe Einflüsse wie bspw. Rauschen nicht fälschlich als gemäß der veränderten Belichtung geändertes Signal interpretiert werden.

Erfindungsgemäß sind die Erfassungsmittel ausgebildet zur Aufnahme von Erfassungs-Bildern mit einer Erfassungs-Integrationszeit. Diese Erfassungs-Bilder können bspw. von den Auswertungsmitteln zur Erkennung von Personen/Objekten verarbeitet werden, stellen also bspw. den normalen Betriebsfall dar. Die Prüfmittel sind ausgebildet zur Vorgabe einer geänderten Integrationszeit, die als Test-Integrationszeit bezeichnet wird. Die Test-Integrationszeit ist gegenüber der in übrigen Betrieb verwendeten Erfassungs-Integrationszeit gezielt verlängert oder verkürzt.

Die Prüfmittel sind ausgebildet zum Vergleich der Belichtung von mindestens einem mit der Test-Integrationszeit aufgenommenen Bild mit mindestens einem mit der Erfassungs-Integrationszeit aufgenommenen Bild. Im Fall einer gegenüber der Erfassungs-Integrationszeit verlängerten Test-Integrationszeit wäre bei ordnungsgemäßer Funktion eine erhöhte Belichtung zu erwarten. In diesem Fall sind die Prüfmittel ausgebildet zur Feststellung der ordnungsgemäßen Funktion bei einer geringeren Belichtung des Erfassungs-Bildes bzw. zur Erkennung eines Fehlerfalls bei einer höheren oder gleichen Belichtung des Erfassungs-Bildes. Im umgekehrten Fall einer verkürzten Test-Integrationszeit ist bei ordnungsgemäßer Funktion eine geringere Belichtung zu erwarten. In diesem Fall sind die Prüfmittel ausgebildet zur Feststellung der ordnungsgemäßen Funktion bei einer höheren Belichtung des Erfassungs-Bildes beziehungsweise zur Erkennung eines Fehlerfalls bei einer kleineren oder gleichen Belichtung des Erfassung-Bildes.

Es ist bevorzugt, die Prüfmittel auszubilden zur Überprüfung der Funktion der Erfassungsmittel durch Ansteuerung des Bildsensors zur Änderung der Integrationszeit einer Mehrzahl von aufeinanderfolgenden, zeitlich beanstandeten Prüf-Zeitpunkten. Bevorzugt erfolgt die Prüfung fortwährend in Intervallen, so dass die ordnungsgemäße Funktion stehts gewährleistet bleibt beziehungsweise ein Fehlerzustand zeitnah erkannt und signalisiert wird.

Zusätzlich zur Überprüfung der Funktion der Erfassungsmittel durch Änderung der Integrationszeit können die Prüfmittel weitere Prüffunktionen aufweisen bzw. realisieren. Dazu ist zunächst anzumerken, dass, obgleich im Zusammenhang mit anderen Prüffunktionen ebenfalls auf dieselben Prüfmittel Bezug genommen wird, die durch Änderung der Integrationszeit eine Überprüfung vornehmen, dies nicht zwingend so zu verstehen ist, dass es sich stets um dieselben Hard-/Softwarekomponenten handeln muss. Die Prüfmittel können auch voneinander verschiedene Komponenten aufweisen, die die verschiedenen Arten von Prüfungen durchführen. Nachfolgend werden einzelne optionale Prüfungsmöglichkeiten genannt, von denen einzelne oder alle kombiniert werden können, wobei bevorzugt eine Feststellung der ordnungsgemäßen Funktion nur bei erfolgreichem Verlauf aller ausgewählten Prüfungen erzeugt wird und auch im Fall von nur einer nicht erfolgreich verlaufenen Prüfung ein Fehlerfall erkannt wird.

Gemäß einer bevorzugten Ausführung kann eine Prüfung durch Rauscherkennung erfolgen. Dazu können die Prüfmittel vorgesehen sein zur Überprüfung der Funktion der Erfassungsmittel durch Vergleich von mindestens zwei Bildern, die zu verschiedenen Zeitpunkten, bspw. direkt aufeinanderfolgend erfasst sind. Im Fall der Erkennung von Unterschieden zwischen den Bildern kann eine Feststellung der ordnungsgemäßen Funktion erfolgen, während eine Erkennung eines Fehlerfalls bei Erkennung einer vollständigen Übereinstimmung der Bilder erfolgt. Selbst ohne Bewegung von Objekten im Schutzbereich und bei ungeänderter Anordnung der Erfassungsmittel können aufgrund unvermeidbaren Rauschens, bspw. thermischen Rauschens, zwei (direkt oder im Abstand) aufeinanderfolgende Bilder bei ordnungsgemäßer Funktion nicht identisch sein. Bei einem Vergleich der Bilder, bspw. durch Bildung einer Differenz von Werten einzelner oder aller Bildpunkte, muss sich stets ein Rauschsignal als zumindest sehr geringwertige Abweichung zeigen, andernfalls müsste von einem "Einfrieren" der Erfassungsmittel ausgegangen werden, was zur Erkennung eines Fehlerfalls führt. Die zusätzliche Überprüfung durch Rauscherkennung hat den Vorteil, dass keine Änderung bzw. Ansteuerung der Erfassungsmittel benötigt wird und die erfassten Bilder uneingeschränkt für die Erkennung von Personen/Objekten verwendet werden können, während sie zusätzlich durch die Prüfmittel ausgewertet werden.

Eine weitere Prüffunktion kann ein Abgleich der zweidimensionalen und dreidimensionalen Daten sein. Hierzu können die Prüfmittel vorgesehen sein zur Prüfung der Funktion der Erfassungsmittel durch Vergleich der digitalen Bilder mit den Abstandsinformationen von Bildbereichen. Bspw. müsste bei Erfassung eines Objekts vor einem Hintergrund das zweidimensionale Abbild in den Bildpunkten erkennbar sein, bspw. die Kontur, während sich andererseits das Objekt in den Abstandsinformationen vom Hintergrund abheben müsste. Folglich können die Prüfmittel ausgebildet sein zur Feststellung der ordnungsgemäßen Funktion bei Übereinstimmung zwischen den digitalen Bildern, bspw. daraus extrahierten/erkannten Objekten und Konturen mit den Abstandsinformationen, bspw. daraus extrahierten Kontrasten, Verläufen o.ä. Im Fall einer Übereinstimmung bzw. einer Abweichung unterhalb einer zulässigen Abweichungsschwelle kann von einer ordnungsgemäßen Funktion ausgegangen werden, während bei Abweichung, insbesondere oberhalb einer Abweichungsschwelle, eine Diskrepanz vorliegt und ein Fehlerfall zu erkennen wäre.

Eine weitere Prüffunktion kann die Erkennung eines projizierten Lichtmusters darstellen. Hierfür sind bevorzugt ansteuerbare Projektionsmittel vorgesehen, um ein Lichtmuster zumindest in Teile des Schutzbereiches zu projizieren. Bei dem Lichtmuster kann es sich um verschiedene Formen und Darstellungen handeln, bspw. um ein Gitter, ebenso aber auch um einen einzelnen Punkt, eine Linie, Kreis o.ä. Die Prüfmittel sind in diesem Fall bevorzugt vorgesehen zur Überprüfung der Funktion des Erfassungsmittels durch Ansteuerung der Projektionsmittel zur Projektion des Lichtmusters, Prüfung mindestens eines digitalen Bildes zur Erkennung des Lichtmusters und Feststellung der ordnungsgemäßen Funktion bzw. eines Fehlerfalls abhängig von der Erkennung des Lichtmusters. Die Projektionsmittel können somit bspw. nur für eine einzelne oder zyklische Prüfung aktiviert werden. Das digitale Bild kann zur Erkennung des Lichtmusters verarbeitet werden. Wird das Lichtmuster erkannt, so kann die ordnungsgemäße Funktion festgestellt werden beziehungsweise der Fehlerfall, wenn das Lichtmuster nicht erkannt wird.

Eine weitere Möglichkeit der Prüfung stellt eine Änderung der Beleuchtungsintensität dar. Die Erfassungsmittel können ansteuerbare Beleuchtungsmittel umfassen. Die Prüfmittel sind bevorzugt vorgesehen zur Überprüfung der Funktion der Erfassungsmittel durch Ansteuerung der Beleuchtungsmittel zur Änderung der Intensität der Beleuchtung und zur Prüfung einer geänderten Belichtung mindestens eines Bildes. Bspw. kann eine erhöhte oder alternativ eine verringerte Intensität der Beleuchtung vorgegeben und ein mit der so geänderten Belichtung aufgenommenes Bild verglichen werden mit einer vorherigen, unveränderten Belichtung. Im Fall einer zur Prüfzwecken erhöhten Intensität der Beleuchtung müsste im ordnungsgemäßen Betriebsfall eine erhöhte Belichtung erkennbar sein beziehungsweise im Fall einer verringerten Intensität der Beleuchtung eine geringere Belichtung. Abhängig von der Feststellung einer geänderten Belichtung in Folge der Änderung der Intensität der Beleuchtung kann somit eine entsprechende Feststellung getroffen werden.

Eine weitere Möglichkeit der Prüfung der ordnungsgemäßen Funktion von Teilen der Vorrichtung kann durch Betrachtung von bestimmten Bereichen der erfassten Bilder erfolgen. Hierfür wären bevorzugt Bereiche innerhalb der erfassten Bilder zu betrachten, die im Betrieb nicht variabel sind, bspw. ein Decken-/Wandbereich, in dem keine Präsenz von Personen oder Objekten zu erwarten ist. Die Prüfmittel können einen Speicher aufweisen zum Speichern eines Referenzbildes und Festlegung von Referenzbereichen darin, wobei bevorzugt die o.g. nicht-variablen Bereiche als Referenzbereiche verwendet werden können. Die Festlegung von Referenzbereichen kann automatisch oder manuell erfolgen. Die Prüfmittel können vorgesehen sein zur Überprüfung der Funktion der Erfassungsmittel durch Vergleich von Referenzbereichen mindestens eines Bildes mit den Referenzbereichen des Referenzbildes. Bei Betrachtung der bevorzugten nicht-variable Bereiche müsste hierbei ordnungsgemäßer Funktion eine zumindest weitgehende Übereinstimmung, das heißt bis auf geringe Abweichung wie bspw. Rauschen eine identische Darstellung der Referenzbereiche im Referenzbild und den jeweils aktuell erfassten Bildern festzustellen sein. Die Prüfmittel sind zur Feststellung der Übereinstimmung bzw. von Unterschieden ausgelegt und können abhängig davon einen Fehlerfall bzw. die ordnungsgemäße Funktion erkennen. Im Fall von signifikanten Unterschieden wäre ein Fehlerfall anzunehmen bzw. bei Übereinstimmung oder Abweichungen nur unterhalb einer minimalen Schwelle (bspw. Rauschen) eine ordnungsgemäße Funktion.

Auf die Erkennung von Personen und/oder Objekten im Sicherheitsbereich kann seitens der Vorrichtung unterschiedlich reagiert werden. Bspw. ist es möglich, dass die Erkennung von Personen/Objekten grundsätzlich zur Ausgabe eines negativen Auswertungssignals führt, wenn keinerlei Objekte oder Personen im Schutzbereich akzeptiert werden. Es kann aber auch bevorzugt sein, verschiedene Bereiche unterschiedlich zu behandeln. Bspw. können innerhalb der erfassten Bilder beziehungsweise innerhalb des Schutzbereich ein oder mehrere Sicherheitsbereiche und/oder ein oder mehrere Warnbereiche festgelegt sein. Die Festlegung dieser Bereiche kann automatisch oder manuell erfolgen. Bevorzugt können die Auswertungsmittel so ausgebildet sein, dass sie bei Erkennung von Personen und/oder Objekten im Sicherheitsbereich ein negatives Auswertungssignal, das heißt ein Sicherheitsalarmsignal ausgeben und/oder bei Erkennung von Personen und/oder Objekten im Warnbereich das Auswertungssignal als Warnsignal ausgeben. So ist es möglich, flexibel auf die Erkennung von Personen oder Objekten zu reagieren.

Gemäß bevorzugten Ausführungsformen umfasst die ToF-Kamera eine gesteuerte Beleuchtungseinrichtung zur Aussendung vom modulierten Licht, eine Bilderfassungseinrichtung zur Erfassung von digitalen Bildern des Schutzbereichs und eine Erfassungszeit-Auswertevorrichtung zur Ermittlung von Abstandsinformationen von Bildbereichen der digitalen Bilder des Schutzbereichs anhand von Verzögerungszeiten zwischen dem Aussenden des modulierten Lichts und der Erfassung der Bildbereiche.

Weiter betrifft die Erfindung ein Verfahren zur Überwachung eines Schutzbereichs, bei dem digitale Bilder und Abstandsinformationen von Bildbereichen der digitalen Bilder eines Schutzbereiches mittels einer ToF-Kamera erfasst werden, die digitalen Bilder und Abstandsinformationen ausgewertet werden zur Erkennung von Personen und/oder Objekten innerhalb des Schutzbereichs und abhängig von der Erkennung ein Auswertungssignal ausgegeben wird. Um eine sicherheitstechnische Anwendung zu ermöglichen, erfolgt eine Funktionsüberprüfung durch Ansteuerung eines zur Erfassung der digitalen Bilder genutzten Bildsensors zur Änderung einer Integrationszeit, Prüfung einer geänderten Belichtung mit mindestens eines Bildes und Ausgabe eines Prüfsignals abhängig von der Feststellung einer geänderten Belichtung.

Nachfolgend werden Ausführungsformen anhand von Zeichnungen näher beschrieben. Dabei zeigen:
- Fig.1: in schematischer, perspektivischer Darstellung ein erstes Ausführungsbeispiel für die Überwachung eines Schutzbereiches mittels einer optischen Schutzvorrichtung;
- Fig.2: die optische Schutzvorrichtung aus Fig. 1 und davor angeordnete Objekte in schematischer Draufsicht;
- Fig. 3: ein Blockschaltbild der optischen Schutzvorrichtung aus Fig. 1, Fig. 2;
- Fig. 4: in schematischer, perspektivischer Darstellung ein zweites Ausführungsbeispiel für die Überwachung eines Schutzbereiches mittels einer optischen Schutzvorrichtung.

In verschiedenen Bereichen, bspw. industriellen Produktionsanlagen, können Schutzeinrichtungen bspw. Menschen vor Gefahren von Produktionsvorgängen bzw. den Produktionsvorgang vor Störungen schützen. Nachfolgend werden Beispiele von Bereichsüberwachungssystemen dargestellt, die sich insbesondere in Bereichen mit notwendiger Zusammenarbeit zwischen Menschen und Maschinen gegenüber trennenden Schutzeinrichtungen als vorteilhaft erweisen.

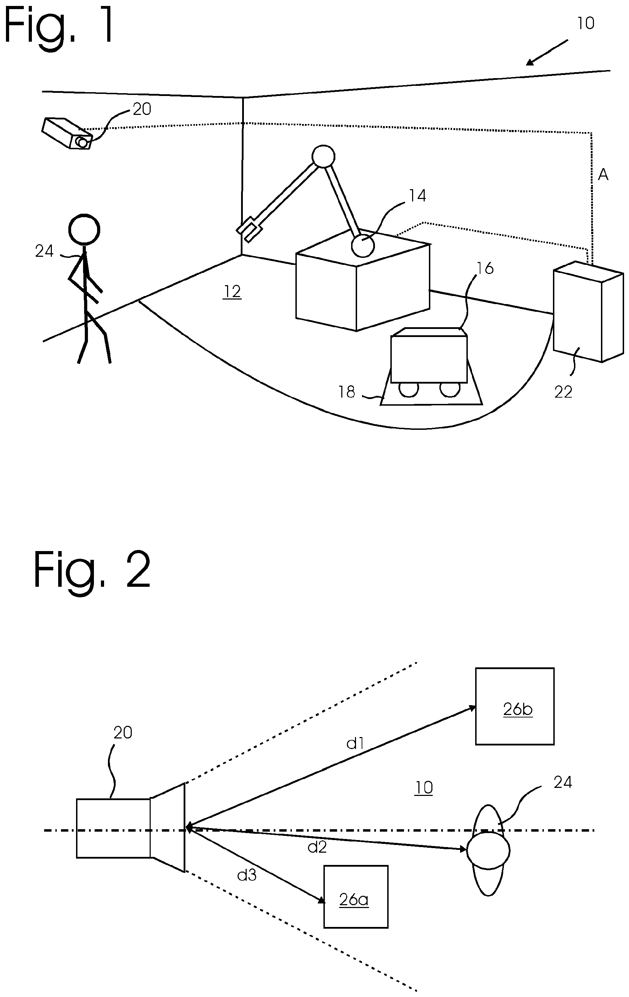

Fig. 1 zeigt als ein erstes Anwendungsbeispiel die Überwachung eines Schutzbereiches 10, in dem eine erste Maschine 14, bspw. ein Industrie-Roboter angeordnet ist. Eine zweite, mobile Maschine 16, zum Beispiel ein autonomes Flurförderfahrzeug, bewegt sich durch den Schutzbereich 10.

Eine optische Überwachungsvorrichtung 20 ist stationär so montiert, dass sie den Schutzbereich 10 mit der ersten, stationären Maschine 14 und der zweiten, mobilen Maschine 16 optisch erfasst. Innerhalb des Schutzbereiches 10 ist ein Sicherheitsbereich 12 um die erste Maschine 14 herum definiert.

Eine Steuereinrichtung 22 steuert die erste Maschine 14 sowie - über eine drahtlose Verbindung (nicht dargestellt) auch die zweite Maschine 16. Die Steuereinrichtung 22 ist mit der optischen Überwachungsvorrichtung 20 gekoppelt und empfängt von dieser ein Auswertungssignal A, bspw. über einen OSSD-Ausgang. Wie nachfolgend näher erläutert wird, zeigt das Auswertungssignal A an, ob gegenwärtig eine Erkennung von Personen oder Objekten im Sicherheitsbereich 12 vorliegt oder nicht. Gleichzeitig zeigt das Auswertungssignal A auch die ordnungsgemäße Funktion der optischen Überwachungsvorrichtung 20 an.

Solange durch das Auswertungssignal A in Form eines Freigabesignals angezeigt wird, dass der Sicherheitsbereich 12 frei ist und zusätzlich die ordnungsgemäße Funktion der optischen Überwachungsvorrichtung 20 gewährleistet ist, steuert die Steuereinrichtung 22 den Betrieb der Maschinen 14, 16 gemäß dem jeweiligen Arbeitsablauf. Personen 24 sind vor der ersten Maschine 14 geschützt, solange sie sich außerhalb des Sicherheitsbereichs 12 aufhalten oder bewegen.

Erkennt die optische Überwachungsvorrichtung 20 wie nachfolgend erläutert wird die Anwesenheit einer Person oder eines Objekts im Sicherheitsbereich 12 und teilt dies durch ein entsprechendes Auswertungssignal A in Form eines Alarm- oder Warnsignals an die Steuereinrichtung 22 mit, stoppt diese den weiteren Betrieb der Maschinen 14, 16 bzw. versetzt diese in einen sicheren Zustand, so dass Personen geschützt und Kollisionen mit Objekten vermieden werden.

Dabei gilt innerhalb des Sicherheitsbereichs 12 eine Besonderheit für die zweite Maschine 16. Um diese herum ist ein Ausschnitts-Bereich 18, d.h. ein Ausschnitt aus dem Sicherheitsbereich 12 definiert, der es der zweiten Maschine 16 erlaubt, sich in Abstimmung mit der Steuereinrichtung 22 innerhalb des Sicherheitsbereichs 12 zu bewegen, ohne dass dies zu einem Warnsignal führt.

Die optische Überwachungsvorrichtung 20 umfasst eine Time-of-Flight (ToF) Kamera, welche sowohl ein herkömmliches digitales 2D-Farbbild aufnimmt als auch ein 3D Bild. Fig. 2 zeigt schematisch die Anordnung einer Person 24 sowie von Objekten 26a, 26b im von der optischen Überwachungsvorrichtung 20 erfassten Schutzbereich 10. Das 3D Bild entsteht über eine spezielle Lichtquelle und belichtet das Bild im nicht-optischen Bereich so, dass ein spezielles Sensor Array die Flugzeit der Photonen messen kann, um daraus aus d=ct/2 die jeweiligen Abstände d1, d2, d3 der Person 24 sowie der Objekte 26a, 26b zu bestimmen. Entsprechende Lichtquellen-Detektor Kombinationen gibt es in verschiedenen Ausführungen, um zum Beispiel mit Hilfe von Phasenverschiebung, oder extrem schneller Elektronik die Flugzeit zu messen.

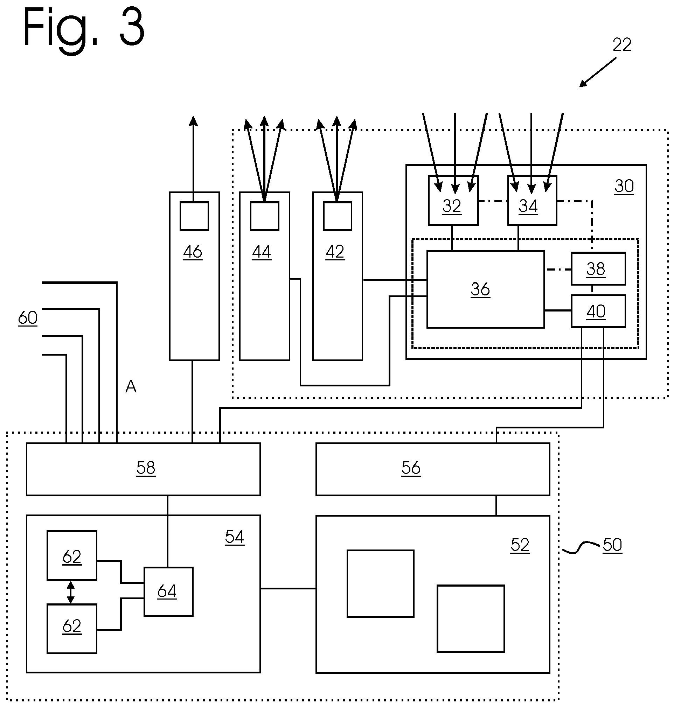

Fig. 3 zeigt beispielhaft für ein Ausführungsbeispiel ein Blockschaltbild der Überwachungsvorrichtung 20. Diese umfasst als Erfassungsmittel ein ToF Kamera Modul 30 mit einem 2D Bildsensor 32 und einem 3D Sensor 34 nach dem oben beschriebenen Funktionsprinzip. Das ToF Kamera Modul 30 umfasst weiter einen Microcontroller 36, eine Stromversorgung 38 und ein Kommunikationsmodul 40 mit High Speed Kapazität.

Teil der Überwachungsvorrichtung 20 ist weiter eine Beleuchtung 42 für den 2D Sensor 32, eine Beleuchtung 44 für den 3D Sensor 34 und ein Laser-Modul 46 für die Projektion eines Lichtmusters als Referenz, wie später erläutert wird. Die Beleuchtung 42 kann bspw. im sichtbaren oder nah-infraroten Bereich erfolgen um Irritationen zu vermeiden. Die Beleuchtung 44 für den 3D Sensor ist moduliert, zumeist im nah-infraroten Bereich. Je nach Realisierung der ToF-Kamera wird hier ein Phasenschieber oder ultrakurze Pulse verwendet.

Die Überwachungsvorrichtung 20 umfasst eine Auswerteeinheit 50 mit Mikroelektronik, bevorzugt mit mindestens zwei Rechenkernen. Damit hard- und/oder softwaremäßig realisiert sind ein Vorauswertungsmodul 52 und ein Safety-Modul 54 als Auswertungs- und Prüfmittel, wie nachfolgend erläutert wird. Weiter verfügt die Auswerteeinheit 50 über eine für sicherheitsgerichtete Geräte ausgelegte Stromversorgung (nicht dargestellt).

Das Vorauswertungsmodul 52 ist über ein erstes I/O Elektronikmodul 56 mit dem ToF Kamera Modul 30 verbunden. Das Safety-Modul 54 ist über ein zweites I/O Elektronikmodul 58 mit dem Laser-Modul 46, dem ToF Kamera Modul 30 und mit einer externen Busverbindung 60 verbunden, bspw. eine sicherheitsgerichtete CAN-Bus Implementation.

Das Safety-Modul 54 ist verbunden mit dem Vorauswertungsmodul 52 und verfügt über ein sicherheitstechnisch redundantes und überwachtes Prozessorpaar 62 und einen Kommunikationschip 64. Dies bedeutet, dass ein Teil durch einen anderen Teil überwacht wird, um Fehler ausschließen zu können.

Im Betrieb liefert das ToF Kamera Modul 30 zyklisch jeweils zwei Bilder, ein von dem 2D Bildsensor 32 erfasstes 2D Bild und ein von dem 3D Sensor 34 unter Ansteuerung der Beleuchtung 44 erfasstes 3D Bild. Der 2D Bildsensor nimmt jeweils ein Bild im optischen und NIR-Bereich auf.

Die 2D und 3D Bilddaten werden in der Auswerteeinheit 50 verarbeitet, zunächst durch das Vorauswertungsmodul 52. Dieses enthält Mikroelektronik, welche eine Vorverarbeitung durchführt. Dadurch wird verhindert, dass die Latenzzeit unnötig erhöht wird. Das Vorauswertungsmodul 52 und/oder das nachfolgende Safety-Modul 54 werten als Auswertungsmittel die 2D und 3D Bilddaten mit Verfahren der digitalen Bildverarbeitung aus, indem Objekte und/oder Personen erkannt und innerhalb des Schutzbereichs 10 lokalisiert werden. Die Identifikation und insbesondere auch die Lokalisierung erkannter Objekte/Personen stützt sich dabei gerade auch auf die 3D-Daten, mit denen einerseits eine dreidimensionale Form/Kontur von Objekten/Personen erfasst werden und andererseits deren Position mit hoher Verlässlichkeit bestimmbar ist. Die Auswertungsmittel im Vorauswertungsmodul 52 und/oder dem Safety-Modul 54 überprüfen, ob sich Objekte/Personen innerhalb des Sicherheitsbereichs 12 befinden (wobei die mobile Maschine 16 im Ausschnitts-Bereich 18 ignoriert wird). Solange die Auswertung ergibt, dass sich keine Personen/Objekte im Sicherheitsbereich 12 befinden, wird das Auswertungssignal A bspw. über einen OSSD-Ausgang (nicht dargestellt) als Freigabesignal ausgegeben, andernfalls als Warnsignal.

Das Safety-Modul 54 realisiert zudem Prüfmittel, um die ordnungsgemäße Funktion der Komponenten der Überwachungsvorrichtung 20 sicherzustellen. Hierzu führt das Safety-Modul zyklisch eine Anzahl verschiedener Tests durch, mit denen die Funktion von Komponenten geprüft werden. Das Ergebnis der Prüfung kann in einem Prüfsignal P zusammengefasst werden.

Die vom Safety-Modul durchgeführten Tests umfassen die folgenden Vorgehensweisen. Je nach Anwendungsfall können einzelne, manche oder alle der beschriebenen TestVerfahren genutzt werden, wobei erfindungsgemäß zumindest der nachfolgend genannte Test durch Änderung der Integrationszeit genutzt wird.

### Test durch Projektion eines Lichtmusters

Bei diesem Test steuert das Safety-Modul 54 das Laser-Modul 46 an, ein Lichtmuster als Referenzbild in den erfassten Schutzbereich 10 zu projizieren. Das Lichtmuster kann bspw. ein oder mehrere einzelne Punkte umfassen, ebenso aber bspw. ein Liniengitter. Das Safety-Modul 54 prüft, ob das als Referenz projizierte Lichtmuster im vom ToF Kamera Modul 30 gelieferten 2D-Bild enthalten ist. Wird keine hinreichende Übereinstimmung festgestellt, so wird ein Fehlerfall festgestellt, d.h. bspw. ein negatives Prüfsignal P erzeugt.

### Test durch Rauschanalyse

Für diesen Test vergleicht das Safety-Modul 54 aufeinanderfolgende vom ToF Kamera Modul 30 gelieferte 2D-Bild. Zwischen den Bildern wird eine punktweise Differenz gebildet. Selbst bei einem stationären Szenario im Schutzbereich 10 werden sich die Bilder durch Rauschen unterscheiden, so dass die Differenz für ein ordnungsgemäßes Signal von Null verschieden sein muss. Bei einer vollständigen Übereinstimmung wird von einem "eingefrorenen" Speicher ausgegangen und ein Fehlerfall festgestellt, d.h. bspw. ein negatives Prüfsignal P erzeugt.

### Test durch Änderung der Integrationszeit

Hierbei steuert das Safety-Modul 54 das ToF Kamera Modul 30 so an, dass die Integrationszeit des 2D-Bildsensors 32 geändert wird. Dann wird die Belichtung eines mit der geänderten Integrationszeit aufgenommenen Bildes mit der eines zuvor oder danach mit der ungeänderten Integrationszeit aufgenommenen Bildes verglichen. Es wird eine Differenz der Helligkeitswerte berechnet und mit einer Mindestschwelle verglichen. Bei einer Verlängerung der Integrationszeit muss sich eine zumindest um die vorgegebene Schwelle erhöhte Belichtung ergeben, bei Verringerung der Integrationszeit eine entsprechend verringerte Belichtung. Wird diese Bedingung nicht erfüllt, wird ein Fehlerfall festgestellt, d.h. bspw. ein negatives Prüfsignal P erzeugt.

### Test durch Änderung der Beleuchtungsintensität

Für diesen Test steuert das Safety-Modul 54 eine Beleuchtung, bspw. die Beleuchtung 42 für den 2D-Sensor so an, dass die Intensität der Beleuchtung geändert wird. Zur Verifikation wird die Belichtung eines mit der geänderten Beleuchtungsintensität durch den 2D-Bildsensor 32, den 3D Bildsensor 34 oder durch beide aufgenommenen Bildes mit der eines zuvor oder danach mit der unveränderten Beleuchtung aufgenommenen Bildes verglichen. Wie bei dem Test durch Änderung der Integrationszeit wird eine Differenz der Helligkeitswerte berechnet und mit einer Mindestschwelle verglichen. Ergibt sich nicht die erwartete erhöhte bzw. verringerte Belichtung, wird eine Fehlfunktion in der Beleuchtung und/oder dem Bildsensor festgestellt und bspw. ein negatives Prüfsignal P erzeugt.

### Test durch Vergleich mit Referenzaufnahme

Nach der Installation des Systems wird eine Referenzaufnahme des Bildbereiches aufgenommen. In dieser Referenzaufnahme wird unter Betriebsbedingungen ein Messwerteensemble in der Aufnahmeeinheit gespeichert, welches die Beleuchtung und die Geometrie des Bildbereiches abdeckt. Dies stellt die sichere Situation dar, in der die Sicherheit gewährleistet ist.

Im Betrieb werden in regelmäßigen zeitlichen Abständen die gemessenen Abstände in Bereichen, in denen dies möglich ist, mit der Referenzaufnahme verglichen, um sicherzustellen, dass die Entfernungsmessung einwandfrei funktioniert. Bei Abweichungen oberhalb einer festgelegten Schwelle wird ein Fehlerfall festgestellt.

### Test durch Vergleich von 2D und 3D Daten

Bei diesem Test wird das 2D-Bild mit dem 3D-Bild verglichen. Wenn es hier über eine festgelegte Schwelle, die bspw. die Messunsicherheit abbildet, Abweichungen in der Darstellung gibt, ist ein Fehler in einem der Sensormodule aufgetreten und es wird ein Fehlerfall festgestellt.

Die Programmierung des Gesamtsystems erfolgt über eine externe Software, die zum Beispiel per USB, die Auswerteeinheit programmiert. In der Software können bspw. Sicherheitsbereiche und Warnbereiche festgelegt und in einem entsprechenden Rahmen die Funktion der Ein- und Ausgänge definiert sein. Hier können zum Beispiel Signale von außen die Position und Anwesenheit von Schutzbereichen ändern, s.o. bzgl. des Ausschnitts-Bereiches).

Wird durch einen der Tests ein Sicherheitsrisiko festgestellt, was hier bspw. durch ein negatives Prüfsignal P anzeigt ist, wird dies über die Schnittstellen, bspw. den CAN-Bus 60 nach Außen signalisiert. Zudem wird dann ein negatives Auswertungssignal A ausgegeben, da der sichere Zustand nicht garantiert werden kann.

Es ist darauf hinzuweisen, dass Bezüge auf das Auswertungssignal A und das Prüfsignal P hier logisch/funktional zu verstehen ist, und in einer Realisierung diese nicht zwangsläufig als separate elektrische Signale vorliegen müssen, sondern auch bspw. als logische Zustände oder gespeicherte Information, bspw. Flags in einer Software-Realisierung.

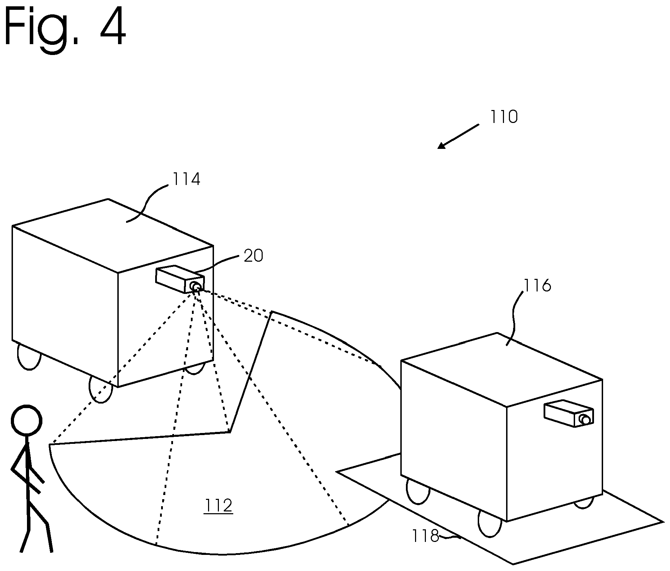

Fig. 4 zeigt als zweites Ausführungsbeispiel einen Schutzbereich 110 mit zwei mobilen Maschinen 114, 116, die mit optischen Überwachungsvorrichtungen 20 ausgestattet sind und jeweils einen Sicherheitsbereich 112 überwachen. Von diesem ist ein Ausschnitts-Bereich 118 ausgenommen.

Der Schutzbereich kann bspw. in verschiedenen Höhen eine unterschiedliche Geometrie haben, die eventuell auch adaptiv ist. Durch die 3D Erkennung ist es möglich, Personen zu identifizieren. Verschiedene Bereiche in industrieller Umgebung sind oftmals nur für geschultes Fachpersonal zu betreten. Wird dieses erkannt, kann die Produktion trotz der Anwesenheit einer Person wie geplant weitergeführt werden. Betritt eine nicht autorisierte Person den Bereich, können entsprechende Vorkehrungen getroffen werden.

Zusammenfassend ermöglichen die erläuterten Ausführungsbeispiele Vorrichtungen und Verfahren zur Überwachung eines Schutzbereiches mit einer ToF-Kamera, bei denen Prüfmittel vorgesehen sind zur Überprüfung der Funktion der Erfassungsmittel. Dabei können die Erfassungsmittel ebenso wie die Prüfmittel in verschiedenen Ausführungsformen unterschiedlich gestaltet sein, auch abweichend von den o.g. Beispielen. Bspw. können, während vorstehend zwei separate Beleuchtungen 42, 44 vorgesehen sind, auch weitere Beleuchtungen vorgesehen sein oder statt zweier nur eine gemeinsame Beleuchtung. Ebenso kann statt separater 2D und 3D Bildsensoren 32, 34 auch nur ein einziger Bildsensor vorgesehen sein, dessen Signal verarbeitet wird.

In jedem Fall wird durch die Prüfmittel ein möglicher Fehlerzustand erkannt, so dass das auszugebene Auswertungssignal abgesichert ist.

## Patentansprüche

1. Vorrichtung zur Überwachung eines Schutzbereichs, mit
- Erfassungsmitteln (30), mindestens umfassend eine ToF-Kamera zur Erfassung von digitalen Bildern des Schutzbereiches (10) und zur Ermittlung von Abstandsinformationen von Bildbereichen der digitalen Bilder des Schutzbereiches (10),
- Auswertungsmitteln (50) zur Auswertung der digitalen Bilder und der Abstandsinformationen zur Erkennung von Personen und/oder Objekten innerhalb des Schutzbereiches (10),
- die Erfassungsmittel (30) mindestens einen digitalen Bildsensor (32) aufweisen zur Lieferung einer Abfolge jeweils von innerhalb einer ansteuerbaren Integrationszeit erfassten Bildern, wobei die Erfassungsmittel (30) ausgebildet sind zur Aufnahme von Erfassungs-Bildern mit einer Erfassungs-Integrationszeit,
- und Prüfmittel (54) vorgesehen sind zur Überprüfung der Funktion der Erfassungsmittel (30)
**dadurch gekennzeichnet, dass**
- die Prüfmittel (54) ausgebildet sind zur Vorgabe einer geänderten, nämlich gegenüber der Erfassungs-Integrationszeit verlängerten oder verkürzten Test-Integrationszeit,
- und zum Vergleich der Belichtung von mindestens einem mit der Test-Integrationszeit aufgenommenen Bild mit mindestens einem Erfassungs-Bild,
- wobei im Fall einer verlängerten Test-Integrationszeit die Prüfmittel (54) ausgebildet sind zur Erkennung eines Fehlerzustands bei einer größeren oder gleichen Belichtung des Erfassungs-Bildes,
- und wobei im Fall einer verkürzten Test-Integrationszeit die Prüfmittel (54) ausgebildet sind zur Erkennung eines Fehlerzustands bei einer kleineren oder gleichen Belichtung des Erfassungs-Bildes.

2. Vorrichtung nach Anspruch 1, bei der
- die Prüfmittel (54) ausgebildet sind zur Ermittlung einer Abweichung der Belichtung und zum Vergleich der Abweichung mit einer Abweichungsschwelle.

3. Vorrichtung nach einem der vorangehenden Ansprüche, bei der
- die Prüfmittel (54) ausgebildet sind, die Überprüfung der Funktion der Erfassungsmittel (30) durch Ansteuerung des Bildsensors zur Änderung der Integrationszeit zu einer Mehrzahl von zeitlich beabstandeten Prüf-Zeitpunkten auszuführen.

4. Vorrichtung nach einem der vorangehenden Ansprüche, bei der
- die Prüfmittel (54) weiter vorgesehen sind zur Überprüfung der Funktion der Erfassungsmittel (30) durch Vergleich von mindestens zwei Bildern und Erkennung eines Fehlerzustands bei einer vollständigen Übereinstimmung der Bilder.

5. Vorrichtung nach einem der vorangehenden Ansprüche, bei der
- die Prüfmittel (54) weiter vorgesehen sind zur Überprüfung der Funktion der Erfassungsmittel (30) durch Vergleich der digitalen Bilder mit den Abstandsinformationen von Bildbereichen zur Erkennung eines Fehlerzustands bei einer Abweichung oberhalb einer Abweichungsschwelle.

6. Vorrichtung nach einem der vorangehenden Ansprüche, bei der
- ansteuerbare Projektionsmittel (46) vorgesehen sind zur Projektion eines Lichtmusters zumindest in Teile des Schutzbereiches (10),
- und die Prüfmittel (54) weiter vorgesehen sind zur Überprüfung der Funktion der Erfassungsmittel (30) durch Ansteuerung der Projektionsmittel (46) zur Projektion des Lichtmusters, Prüfung mindestens eines digitalen Bildes zur Erkennung des Lichtmusters und Erkennung eines Fehlerzustands abhängig von der Erkennung des Lichtmusters.

7. Vorrichtung nach einem der vorangehenden Ansprüche, bei der
- ansteuerbare Beleuchtungsmittel (42, 44) vorgesehen sind,
- und die Prüfmittel (54) weiter vorgesehen sind zur Überprüfung der Funktion der Erfassungsmittel (30) durch Ansteuerung der Beleuchtungsmittel (42, 44) zur Änderung der Intensität der Beleuchtung und zur Prüfung einer geänderten Belichtung mindestens eines Bildes und Erkennung eines Fehlerzustands abhängig von der Feststellung einer geänderten Belichtung infolge der Änderung der Intensität der Beleuchtung.

8. Vorrichtung nach einem der vorangehenden Ansprüche, bei der
- die Prüfmittel (54) einen Speicher aufweisen zum Speichern eines Referenzbildes und einer Festlegung von Referenzbereichen darin,
- und die Prüfmittel (54) weiter vorgesehen sind zur Überprüfung der Funktion der Erfassungsmittel (30) durch Vergleich von Referenzbereichen mindestens eines Bildes mit den Referenzbereichen des gespeicherten Referenzbildes und Erkennung eines Fehlerzustands abhängig von der Feststellung von Unterschieden.

9. Vorrichtung nach einem der vorangehenden Ansprüche, bei der
- innerhalb des Schutzbereiches (10) mindestens ein Sicherheitsbereich (12) festgelegt ist, wobei die Auswertungsmittel (50) so ausgebildet sind, dass bei Erkennung von Personen und/oder Objekten im Sicherheitsbereich (12) ein Auswertungssignal A als Sicherheitsalarmsignal ausgegeben wird
und/oder
- innerhalb des Schutzbereiches (10) mindestens ein Warnbereich festgelegt ist, wobei die Auswertungsmittel (50) so ausgebildet sind, dass bei Erkennung von Personen und/oder Objekten im Warnbereich ein Auswertungssignal (A) als Warnsignal ausgegeben wird.

10. Vorrichtung nach einem der vorangehenden Ansprüche, bei der die TOF-Kamera umfasst
- eine gesteuerte Beleuchtungseinrichtung (44) zum Aussenden von moduliertem Licht,
- eine Bilderfassungseinrichtung (34) zur Erfassung von digitalen Bildern des Schutzbereiches, und
- einer Erfassungszeit-Auswertevorrichtung zur Ermittlung von Abstandsinformationen von Bildbereichen der digitalen Bilder des Schutzbereiches anhand von Verzögerungszeiten zwischen dem Aussenden des modulierten Lichts und der Erfassung der Bildbereiche.

11. Verfahren zur Überwachung eines Schutzbereichs, bei dem
- von einem Schutzbereich (10) digitale Bilder und Abstandsinformationen von Bildbereichen der digitalen Bilder des Schutzbereiches (10) mittels einer TOF-Kamera (30) erfasst werden durch Aufnahme von Erfassungs-Bildern mit einer Erfassungs-Integrationszeit,
- die digitalen Bilder und Abstandsinformationen der Erfassungs-Bilder ausgewertet werden zur Erkennung von Personen und/oder Objekten innerhalb des Schutzbereiches (10)
**dadurch gekennzeichnet, dass**
- eine Funktionsüberprüfung erfolgt durch Vorgabe einer geänderten, nämlich gegenüber der Erfassungs-Integrationszeit verlängerten oder verkürzten Test-Integrationszeit und Aufnahme von Bildern mit der Test-Integrationszeit,
- und durch Vergleich der Belichtung von mindestens einem mit der Test-Integrationszeit aufgenommenen Bild mit mindestens einem Erfassungs-Bild,
- wobei im Fall einer verlängerten Test-Integrationszeit ein Fehlerzustand erkannt wird bei einer größeren oder gleichen Belichtung des Erfassungs-Bildes,
- und wobei im Fall einer verkürzten Test-Integrationszeit ein Fehlerzustand erkannt wird bei einer kleineren oder gleichen Belichtung des Erfassungs-Bildes.

## Claims

1. Device for monitoring a protective area, comprising
- acquisition means (30), at least comprising a ToF camera for acquiring digital images of the protective area (10) and for determining distance information of image areas of the digital images of the protective area (10),
- evaluation means (50) for evaluating the digital images and the distance information for detecting persons and/or objects within the protective area (10),
- the acquisition means (30) have at least one digital image sensor (32) for supplying a sequence of images acquired within a controllable integration time in each case, the acquisition means (30) being designed to acquire acquisition images with an acquisition integration time,
- and verification means (54) are provided for verifying the function of the acquisition means (30)
**characterized in that**
- the verification means (54) are designed for specifying a modified verification integration time, namely one which is longer or shorter than the acquisition integration time,
- and for comparing the exposure of at least one image acquired with the verification integration time with at least one acquisition image,
- wherein, in the case of an extended verification integration time, the verification means (54) are designed to detect a fault state with a larger or equal exposure of the acquisition image,
- and wherein, in the case of a shortened verification integration time, the verification means (54) are designed to detect a fault state with a smaller or equal exposure of the acquisition image.

2. Device according to claim 1, wherein
- the verification means (54) are designed to determine a deviation of the exposure and to compare the deviation with a deviation threshold.

3. Device according to one of the preceding claims, wherein
- the verification means (54) are designed to carry out the verification of the function of the acquisition means (30) by controlling the image sensor to change the integration time at a plurality of verification times spaced apart in time.

4. Device according to any one of the preceding claims, wherein
- the verification means (54) are further provided for verifying the function of the acquisition means (30) by comparing at least two images and detecting a fault state when the images completely match.

5. Device according to any one of the preceding claims, wherein
- the verification means (54) are further provided for verifying the function of the acquisition means (30) by comparing the digital images with the distance information of image areas for detecting a fault state in case of a deviation above a deviation threshold.

6. Device according to one of the preceding claims, wherein
- controllable projection means (46) are provided for projecting a light pattern at least into parts of the protective area (10),
- and the verification means (54) are further provided for verifying the function of the acquisition means (30) by controlling the projection means (46) for projecting the light pattern, verifying at least one digital image for detecting the light pattern and detecting a fault state depending on the detection of the light pattern.

7. Device according to one of the preceding claims, wherein
- controllable illumination means (42, 44) are provided
- and the verification means (54) are further provided for verifying the function of the acquisition means (30) by controlling the illumination means (42, 44) to change the intensity of the illumination and for verifying a changed exposure of at least one image and detecting a fault state depending on the detection of a changed exposure due to the change in the intensity of the illumination.

8. Device according to any one of the preceding claims, wherein
- the verification means (54) comprise a memory for storing a reference image and a determination of reference areas therein,
- and the verification means (54) are further provided for verifying the function of the acquisition means (30) by comparing reference areas of at least one image with the reference areas of the stored reference image and detecting a fault state depending on the detection of differences.

9. Device according to any one of the preceding claims, wherein
- at least one safety area (12) is defined within the protective area (10), wherein the evaluation means (50) are designed such that an evaluation signal A is output as a safety alarm signal when persons and/or objects are detected in the safety area (12)
and/or
- at least one warning area is defined within the protective area (10), the evaluation means (50) being designed in such a way that an evaluation signal (A) is output as a warning signal when persons and/or objects are detected in the warning area.

10. Device according to one of the preceding claims, wherein the TOF camera comprises
- a controlled illumination device (44) for emitting modulated light,
- an image acquisition device (34) for acquiring digital images of the protective area, and
- an acquisition time evaluation device for determining distance information of image areas of the digital images of the protective area on the basis of delay times between the emission of the modulated light and the acquisition of the image areas.

11. Method for monitoring a protective area, in which
- digital images of a protective area (10) and distance information of image areas of the digital images of the protective area (10) are acquired by means of a TOF camera (30) by recording acquisition images with an acquisition integration time,
- the digital images and distance information of the acquisition images are evaluated for detecting persons and/or objects within the protective area (10)
**characterized in that**
- a functional verification is carried out by specifying a modified verification integration time, namely a verification integration time which is longer or shorter than the acquisition integration time, and recording images with the verification integration time
- and by comparing the exposure of at least one image acquired with the verification integration time with at least one acquisition image,
- wherein, in the case of an extended verification integration time, a fault state is acquired with a larger or equal exposure of the acquisition image,
- and wherein, in the case of a shortened verification integration time, a fault state is detected with a smaller or equal exposure of the acquisition image.

## Revendications

1. Dispositif de surveillance d'une zone de protection, comprenant
- des moyens d'acquisition (30), comprenant au moins une caméra ToF pour acquérir des images numériques de la zone de protection (10) et pour déterminer les informations de distance des zones d'image des images numériques de la zone de protection (10),
- des moyens d'évaluation (50) pour évaluer les images numériques et les informations de distance afin de détecter des personnes et/ou des objets dans la zone de protection (10),
- les moyens d'acquisition (30) comportent au moins un capteur d'images numériques (32) pour fournir une séquence d'images acquises dans un temps d'intégration contrôlable dans chaque cas, les moyens d'acquisition (30) étant conçus pour acquérir des images d'acquisition avec un temps d'intégration d'acquisition,
- et des moyens de vérification (54) sont prévus pour vérifier le fonctionnement des moyens d'acquisition (30)
**caractérisé en ce que**
- les moyens de vérification (54) sont conçus pour spécifier un temps d'intégration de vérification modifié , à savoir un temps plus long ou plus court que le temps d'intégration d'acquisition,
- et pour comparer l'exposition d'au moins une image acquise avec le temps d'intégration de vérification avec au moins une image d'acquisition,
- dans lequel, dans le cas d'un temps d'intégration de vérification prolongé, les moyens de vérification (54) sont conçus pour détecter un état de défaut avec une exposition plus grande ou égale de l'image d'acquisition,
- et dans lequel, dans le cas d'un temps d'intégration de vérification raccourci, les moyens de vérification (54) sont conçus pour détecter un état de défaut avec une exposition plus petite ou égale de l'image d'acquisition.

2. Dispositif selon la revendication 1, dans lequel
- les moyens de vérification (54) sont conçus pour déterminer une déviation de l'exposition et pour comparer la déviation avec un seuil de déviation.

3. Dispositif selon l'une des revendications précédentes, dans lequel
- les moyens de vérification (54) sont conçus pour effectuer la vérification du fonctionnement des moyens d'acquisition (30) en commandant au capteur d'image de modifier le temps d'intégration à plusieurs instants de vérification espacés dans le temps.

4. Dispositif selon l'une quelconque des revendications précédentes, dans lequel
- les moyens de vérification (54) sont en outre prévus pour vérifier le fonctionnement des moyens d'acquisition (30) en comparant au moins deux images et en détectant un état de défaut lorsque les images correspondent complètement.

5. Dispositif selon l'une quelconque des revendications précédentes, dans lequel
- les moyens de vérification (54) sont en outre prévus pour vérifier le fonctionnement des moyens d'acquisition (30) en comparant les images numériques avec les informations de distance des zones d'image pour détecter un état de défaut en cas d'écart supérieur à un seuil d'écart.

6. Dispositif selon l'une des revendications précédentes, dans lequel
- des moyens de projection contrôlables (46) sont prévus pour projeter un motif lumineux au moins dans des parties de la zone de protection (10),
- et les moyens de vérification (54) sont en outre prévus pour vérifier le fonctionnement des moyens d'acquisition (30) en commandant les moyens de projection (46) pour projeter le motif lumineux, en vérifiant au moins une image numérique pour détecter le motif lumineux et en détectant un état d'erreur en fonction de la détection du motif lumineux.

7. Dispositif selon l'une des revendications précédentes, dans lequel
- des moyens d'éclairage contrôlables (42, 44) sont prévus
- et les moyens de vérification (54) sont en outre prévus pour vérifier le fonctionnement des moyens d'acquisition (30) en commandant les moyens d'éclairage (42, 44) pour modifier l'intensité de l'éclairage et pour vérifier une exposition modifiée d'au moins une image et détecter un état d'erreur en fonction de la détection d'une exposition modifiée due à la modification de l'intensité de l'éclairage.

8. Dispositif selon l'une quelconque des revendications précédentes, dans lequel
- les moyens de vérification (54) comprennent une mémoire pour stocker une image de référence et une détermination de zones de référence,
- et les moyens de vérification (54) sont en outre prévus pour vérifier le fonctionnement des moyens d'acquisition (30) en comparant les zones de référence d'au moins une image avec les zones de référence de l'image de référence stockée et en détectant un état d'erreur en fonction de la détection des différences.

9. Dispositif selon l'une quelconque des revendications précédentes, dans lequel
- au moins une zone de sécurité (12) est définie à l'intérieur de la zone de protection (10), dans laquelle les moyens d'évaluation (50) sont conçus de manière à ce qu'un signal d'évaluation A soit émis en tant que signal d'alarme de sécurité lorsque des personnes et/ou des objets sont détectés dans la zone de sécurité (12)
et/ou
- au moins une zone d'avertissement est définie dans la zone de protection (10), les moyens d'évaluation (50) étant conçus de manière à ce qu'un signal d'évaluation (A) soit émis en tant que signal d'avertissement lorsque des personnes et/ou des objets sont détectés dans la zone d'avertissement.

10. Dispositif selon l'une des revendications précédentes, dans lequel la caméra TOF comprend
- un dispositif d'éclairage contrôlé (44) pour émettre une lumière modulée,
- un dispositif d'acquisition d'images (34) pour l'acquisition d'images numériques de la zone de protection, et
- un dispositif d'évaluation du temps d'acquisition pour déterminer les informations de distance des zones d'image des images numériques de la zone de protection sur la base du délai entre l'émission de la lumière modulée et l'acquisition des zones d'image.

11. Méthode de surveillance d'une zone de protection, dans laquelle
- les images numériques d'une zone de protection (10) et les informations sur la distance des zones d'image des images numériques de la zone de protection (10) sont acquises au moyen d'une caméra TOF (30) en enregistrant des images d'acquisition avec un temps d'intégration d'acquisition,
- les images numériques et les informations de distance des images d'acquisition sont évaluées pour détecter des personnes et/ou des objets à l'intérieur de la zone de protection (10)
**caractérisé par le fait que**
- une vérification fonctionnelle est effectuée en spécifiant un temps d'intégration de vérification modifié, à savoir un temps d'intégration de vérification plus long ou plus court que le temps d'intégration d'acquisition, et en enregistrant des images avec le temps d'intégration de vérification
- et en comparant l'exposition d'au moins une image acquise avec le temps d'intégration de vérification avec au moins une image d'acquisition,
- dans lequel, dans le cas d'un temps d'intégration de vérification prolongé, un état de défaut est acquis avec une exposition plus grande ou égale de l'image d'acquisition,
- dans le cas d'un temps d'intégration de vérification réduit, un état de défaut est détecté avec une exposition plus petite ou égale de l'image d'acquisition.
